# EUROPÄISCHE PATENTANMELDUNG

(11) **EP 4 279 635 A1**
(43) Veröffentlichungstag der Anmeldung: **22.11.2023**
(21) Anmeldenummer: 22173526.9
(22) Anmeldetag: 16.05.2022
(51) Int. Cl.: C25B 1/04, C25B 9/19, C25B 15/08, B01D 53/00

(54) **VORRICHTUNG UND VERFAHREN ZUM ELEKTRISCHEN ERZEUGEN VON WASSERSTOFF AUS WASSER**

(71) Anmelder: Friedrich Vorwerk SE & Co. KG, 21255 Tostedt (DE)
(72) Erfinder: Engelke, Stephan, 21255 Tostedt (DE)
(74) Vertreter: Bittner, Thomas L.

(57) **Zusammenfassung**

Die Erfindung betrifft eine Vorrichtung (1) und ein Verfahren zum elektrischen Erzeugen von Wasserstoff aus Wasser. Die Vorrichtung umfasst Folgendes: einen Elektrolyseur (2) der PEM- oder AEM-Bauart, aufweisend einen Eingang (5) zum Zuführen von Wasser aus einem Wasservorrat (3), einen ersten Ausgang (6) für mit Wasser und / oder Wasserdampf angereicherten und im Elektrolyseur (2) erzeugten Wasserstoff und einen zweiten Ausgang (7) für Sauerstoff und Wasser; und eine Wasserabscheidevorrichtung (9) mit mehreren Abscheidestufen, bei der ein Eingang (8) mit dem ersten Ausgang (6) leitungsverbunden ist und deren Ausgang (16), eingerichtet ist, getrockneten Wasserstoff abzugeben. Die mehreren Abscheidestufen weisen Folgendes auf: eine erste mechanische Abscheidestufe (10), eine zweite thermische Abscheidestufe (11), welche in der mehrstufigen Wasserabscheidevorrichtung (9) der ersten mechanischen Abscheidestufe (10) nachgelagert ist, und eine dritte Koagulations-Abscheidestufe (12), welche in der mehrstufigen Wasserabscheidevorrichtung (9) der zweiten thermischen Abscheidestufe (11) nachgelagert ist und einen Koagulator aufweist.

## Beschreibung

Die Erfindung betrifft eine Vorrichtung und ein Verfahren zum elektrischen Erzeugen von Wasserstoff aus Wasser.

### Hintergrund

Unter Verwendung von elektrischer Energie kann Wasserstoff mittels eines Elektrolyseurs aus Wasser hergestellt werden. Elektrolyseure sind in unterschiedlichen Bauformen bekannt. Hierzu gehören Elektrolyseure der (Protonen Elektrolyt Membrane) PEM- oder (Anionen Elektrolyt Membrane) AEM-Bauart, also ein Elektrolyseur, der mit einer für Protonen oder einer für Anionen durchlässigen Polymermembran arbeitet. Derartige Elektrolyseure werden typischerweise in sogenannten Stacks gebaut, also in Stapeln, um auf möglichst kleinem Raum eine möglichst hohe Gasausbeute zu erzielen. Hierbei wird jeder Membran auf einer Seite Wasser zugeführt, wobei durch die zu beiden Seiten der Membran angeordneten und mit der elektrischen Spannung versorgten Elektroden eine Aufspaltung in Wasserstoff und Sauerstoff erfolgt und Wasserstoff auf einer Seite der Membran und Sauerstoff auf der anderen Seite entsteht, auf welcher das Wasser zugeführt wird. AEM-Membranen können wahlweise auch mit Wasser auf der Wasserstoffseite betrieben werden.

Die lonendurchgängigkeit der Polymerelektrolytmembran zielt auf das H⁺- oder das OH⁻-Ion, die jedoch stets mit verbundenen Wassermolekülen die Membran durchdringen oder gänzlich in Wasser gelöst sind, was dazu führt, dass auch der erzeugte Wasserstoff typischerweise mit Wasserdampf und / oder Wasser in Tröpfchenform angereichert ist. Bei vielen technischen Anwendungen ist diese im Wasserstoff mitgeführte Wasserfracht unerwünscht. So ist beispielsweise bei der Speicherung des Wasserstoffs üblicherweise unter hohem Druck in Transportgasleitungen oder unter sehr hohem Druck in der Mobilität die mitgeführte Wasserfracht vor Einlagerung fast vollständig zu entfernen. Hierfür werden Wasserabscheider genutzt.

Dokument JP 8085892 A offenbart eine Vorrichtung zur elektrischen Erzeugung von Wasserstoff und Sauerstoff aus Wasser, welches einen Elektrolyseur vom PEM-Typ aufweist. Das bekannte Gerät weist Wasserabscheidevorrichtungen auf, welche mit den Ausgängen des Elektrolyseurs leitungsverbunden sind. Die Wasserabscheidevorrichtungen bestehen jeweils aus einem Vorabscheider zum Trennen von gasförmigen und flüssigen Anteilen sowie einer thermischen Abscheidestufe, die mit Peltier-Elementen gebildet ist.

Dokument EP 2 337 972 A1 offenbart Gerät zur elektrischen Erzeugung von Wasserstoff aus Wasser mit einem Elektrolyseur der PEM-Bauart, der einen Eingang zum Zuführen von Wasser und einen ersten Ausgang für den mit Wasser und / oder Wasserdampf angereicherten und im Elektrolyseur erzeugten Wasserstoff sowie einen zweiten Ausgang für Sauerstoff und Wasser aufweist, und mit einer Wasserabscheideeinrichtung, deren Eingang mit dem ersten Ausgang des Elektrolyseurs leitungsverbunden ist und deren gasführender Ausgang zu einem Wasserstoffentnahmeanschluss im oder am Gerät führt, wobei die Wasserabscheideeinrichtung mindestens eine erste thermische Abscheidestufe aufweist. Zwischen dem ersten Ausgang des Elektrolyseurs und dem Eingang der thermischen Abscheidestufe ist ein mechanischer Vorabscheider geschaltet. Der thermischen Abscheidestufe ist eine weitere Abscheidestufe nachgeschaltet, die eine Druckwechseladsorptionseinrichtung aufweist.

### Zusammenfassung

Aufgabe der Erfindung ist es, eine Vorrichtung und ein Verfahren zum elektrischen Erzeugen von Wasserstoff aus Wasser anzugeben, welche ein effizientes Entfernen des Wasserdampfs und / oder des Wassers aus dem hergestellten Wasserstoff verbessern. Der erzeugte Wasserstoff soll im Wesentlichen vollständig von dem Wasserdampf und / oder des Wassers befreit bereitgestellt werden.

Gelöst wird die Aufgabe durch eine Vorrichtung und ein Verfahren zum elektrischen Erzeugen von Wasserstoff aus Wasser nach den Ansprüchen 1 und 10. Ausgestaltungen sind Gegenstand von abhängigen Unteransprüchen.

Nach einem Aspekt ist eine Vorrichtung zum elektrischen Erzeugen von Wasserstoff aus Wasser geschaffen, wobei die Vorrichtung Folgendes aufweist: einen Elektrolyseur der PEM- oder AEM-Bauart, aufweisend einen Eingang zum Zuführen von Wasser, einen ersten Ausgang für mit Wasser und / oder Wasserdampf angereicherten und im Elektrolyseur erzeugten Wasserstoff und einen zweiten Ausgang für Sauerstoff und Wasser; und eine Wasserabscheidevorrichtung mit mehreren Abscheidestufen, bei der ein Eingang mit dem ersten Ausgang leitungsverbunden ist und deren Ausgang, eingerichtet ist, getrockneten Wasserstoff abzugeben. Die mehreren Abscheidestufen weisen weiterhin Folgendes auf: eine erste mechanische Abscheidestufe; eine zweite thermische Abscheidestufe, welche in der mehrstufigen Wasserabscheidevorrichtung der ersten mechanischen Abscheidestufe nachgelagert ist; und eine dritte Koagulations-Abscheidestufe, welche in der mehrstufigen Wasserabscheidevorrichtung der zweiten thermischen Abscheidestufe nachgelagert ist und einen Koagulator aufweist.

Nach einem weiteren Aspekt ist ein Verfahren zum elektrischen Erzeugen von Wasserstoff aus Wasser geschaffen, aufweisend die folgenden Schritte: Bereitstellen eines Elektrolyseurs der PEM- oder AEM-Bauart mit einem Eingang zum Zuführen von Wasser, einem ersten Ausgang für mit Wasser und / oder Wasserdampf angereicherten und im Elektrolyseur erzeugten Wasserstoff und einem zweiten Ausgang für Sauerstoff und Wasser; Bereitstellen einer Wasserabscheidevorrichtung mit mehreren Abscheidestufen, bei der ein Eingang mit dem ersten Ausgang leitungsverbunden ist und deren Ausgang, eingerichtet ist, getrockneten Wasserstoff zu einer Wasserstoffentnahme abzugeben, wobei die mehreren Abscheidestufen Folgendes aufweist: eine erste mechanische Abscheidestufe, eine zweite thermische Abscheidestufe, welche in der mehrstufigen Wasserabscheidevorrichtung der ersten mechanischen Abscheidestufe nachgelagert ist, und eine dritte Koagulations-Abscheidestufe, welche in der mehrstufigen Wasserabscheidevorrichtung der zweiten thermischen Abscheidestufe nachgelagert ist und einen Koagulator aufweist; Zuführen von Wasser zu dem Elektrolyseur; Erzeugen von mit Wasser und / oder Wasserdampf angereichertem Wasserstoff mittels des Elektrolyseurs; mehrstufiges Trocknen des mit Wasser und / oder Wasserdampf angereicherten Wasserstoffs mittels der Wasserabscheidevorrichtung und Bereitstellen von getrocknetem Wasserstoff an der Wasserstoffentnahme.

Die erste mechanische Abscheidestufe kann zum Beispiel einen auf der Schwerkraft oder Fliehkraft beruhenden mechanischen Abscheideprozess anwenden. In der zweiten thermischen Abscheidestufe kann zum Wasserabscheiden eine Kühlung auf eine Temperatur nahe dem Gefrierpunkt genutzt werden. Die dritte Koagulations-Abscheidestufe sieht eine weitere Wasserabscheidung basierend auf dem Prinzip der Koagulation feinster Tröpfchen vor.

Die dritte Koagulations-Abscheidestufe kann mit einem Gewebe- und / oder einem Vlies-Koagulator gebildet sein.

Die Wasserabscheidevorrichtung mit den mehreren Abscheidestufen kann als eine integrale Wasserabscheidevorrichtung ausgeführt sein.

Für die mehreren Abscheidestufen kann ein gemeinsamer Druckraum gebildet sein, in welchem für die mehreren Abscheidestufen eine jeweilige Wasserabscheidung ausführbar und aus dem abgeschiedenes Kondensat für die mehreren Abscheidestufen gemeinsam abführbar ist.

Der gemeinsame Druckraum für die mehreren Abscheidestufen kann in einem die mehreren Abscheidestufen aufnehmenden Behälter ausgebildet sein. Die Abscheidestufen sind in dem (Druck-)Behälter vereint. Es bedarf keiner weiteren Leitungsverbindungen zwischen den Abscheidestufen, sowohl für Kondensat als auch für den Wasserstoff.

Ein Ausgang der Wasserabscheidevorrichtung kann mit einem Wasserkreislauf des Elektrolyseurs leitungsverbunden sein, so dass Wasser rückführbar ist. Ein wasserführender Ausgang der Wasserabscheidevorrichtung ist hier mit dem Wasserkreislauf des Elektrolyseurs zum Rückführen des Wassers leitungsverbunden. Die Leitungsverbindung kann zumindest zeitweise ausgebildet sein, d. h. in der Leitung sind entsprechende Ventile vorgesehen, die bedarfsweise angesteuert werden können, um das gesammelte Wasser rückzuführen. Zum Transport dieses Wassers kann der Systemleitungsdruck innerhalb der Vorrichtung dienen, d. h. der Wasserstoffdruck.

Bei der Vorrichtung kann ein Wasservorrat vorgesehen sein, welcher mit dem Eingang des Elektrolyseurs zum Zuführen von Wasser verbunden ist, wobei der Wasservorrat einen integrierten Sauerstoffabscheider aufweist.

Der Elektrolyseur kann für einen Betrieb bei einer Betriebstemperatur zwischen etwa 60°C und etwa 120°C, bevorzugt zwischen etwa 70°C und etwa 80°C eingerichtet oder ausgelegt sein. Bei der Vorrichtung kann der Elektrolyseur so mit vergleichsweise hoher Temperatur und so mit hohem Wirkungsgrad betrieben werden. Da für einen effektiven Betrieb des Elektrolyseurs die Temperatur bevorzugt möglichst hoch zu wählen ist, andererseits jedoch die Protonenaustauschmembran stets feucht gehalten werden muss, ergeben sich vom Wirkungsgrad her günstige Betriebsbedingungen, wenn der Elektrolyseur im Bereich von etwa 70°C bis etwa 80°C oder mehr betrieben wird. Nach oben hin ist die Betriebstemperatur durch den Siedepunkt des Wassers begrenzt, der nicht erreicht werden darf. Daher kann vorgesehen sein, bei Betriebstemperaturen > 90°C auch im Wassersystem ein Überdruck auszubilden. Allerdings, verdoppelt sich die vom Wasserstoff mitgeführte Wasserfracht etwa alle 11°C. Wird also die Betriebstemperatur von etwa 60°C auf etwa 70°C erhöht, so ergibt sich nahezu die doppelte Menge des abzuführenden Wassers. Eine solche Menge von Wasser abzuscheiden, ist mit der hier vorgeschlagenen Vorrichtung unproblematisch möglich, insbesondere wasserstoffverlustfrei. Der Elektrolyseur kann somit wesentlich effektiver, da mit höherer Temperatur, betrieben werden. Die zur Kühlung aufzuwendende Energie ist demgegenüber deutlich geringer.

Die Vorrichtung zum elektrischen Erzeugen von Wasserstoff aus Wasser mit dem Elektrolyseur, der Wasserabscheidevorrichtung sowie zugeordneten Leitungen kann eingerichtet sein, den getrockneten Wasserstoff mit einem Druck etwa 20bar bis etwa 100bar, bevorzugt mit einem Druck von etwa 40bar bis etwa 100bar zu erzeugen und an einer Wasserstoffentnahme bereitzustellen. Über die Wasserstoffentnahme kann der Wasserstoff einem Druckbehälter zugeführt werden.

Die Vorrichtung kann eine Druck-Temperatur-Wechselabsorption-Einrichtung aufweisen, die der Wasserabscheidevorrichtung nachgelagert ist. Druck-Temperatur-Wechselabsorption-Einrichtung kann sich direkt an die Wasserabscheidevorrichtung anschließen. Die Druck-Temperatur-Wechselabsorption-Einrichtung kann Behälter aufweisen, in denen mit einem Regenerationsgas getrocknet wird, das entweder aus erhitzter Luft bestehen kann und / oder aus einem Kreislaufgas, das zunächst gekühlt und nach einem Gebläse nacherhitzt wird. Bei nur sehr geringem Druckwechsel (aber dann eher Temperaturwechseladsorption) kann vorgesehen sein, dass das Regenerationsgas mittels eines Injektors durch den Produktgasstrom angesaugt wird.

Die Vorrichtung kann besonders effizient arbeiten, wenn Elektrolyseur, Wasserabscheidevorrichtung sowie etwaige weitere Vorrichtungskomponenten wie zum Beispiel Verbindungsleitungen, Ventile und dergleichen, so ausgelegt sind, dass der Wasserstoff mit einem Druck von etwa 20 bar oder mehr, vorzugsweise etwa 40 bis etwa 100bar, erzeugt und gehalten wird. Der Betrieb der Vorrichtung mit diesem Druck ist vorteilhaft, da dann für die Speicherung und die Fortleitung des Wasserstoffs über die Wasserstoffentnahme in Gastransportleitungen keine gesonderte Druckerhöhungsanlage erforderlich ist, bzw. die weitere Kompression deutlich erleichtert wird. Die Vorrichtung stellt den trockenen Wasserstoff mit einem hierfür geeigneten Druck bereit.

Die zweite thermische Abscheidestufe kann eine elektrisch betriebene Kühleinrichtung aufweisen. Solche Kühleinrichtungen sind vergleichsweise kostengünstig. Bei größeren Vorrichtungen kann eine Kompressor-Kühlvorrichtung verwendet werden. Alternativ, insbesondere bei kleineren Vorrichtungen kann auch eine Absorber-Kühlvorrichtung oder eine mit Peltier-Elementen arbeitenden Kühlvorrichtung eingesetzt werden. Die thermisch arbeitende Abscheidestufe kann eingerichtet sein, den aus dem Elektrolyseur kommenden und mit Wasser und / oder Wasserdampf beladenen Wasserstoff auf eine Temperatur kurz oberhalb des Gefrierpunkts herunter zu kühlen, zum Beispiel auf eine Temperatur zwischen 0°C und etwa 5°C. In diesem Temperaturbereich kondensiert ein Großteil des im Wasserstoffstrom mitgeführten Wassers.

Das in der mehrstufigen Wasserabscheidevorrichtung, insbesondere integralen Wasserabscheidevorrichtung gesammelte Wasser kann über eine Rückführleitung dem Wasservorrat oder -reservoir zugeführt werden, aus dem der Elektrolyseur mit Wasser versorgt wird.

Zwischen einem Auslassventil der Wasserabscheidevorrichtung, welches mit der Rückführleitung verbunden ist, und dem Wassersvorrat kann ein Behälter, wahlweise mit einer Pumpe, installiert sein, der zur Atmosphäre geöffnet und für den wahlweise ein Wasser-Niveau überwacht werden kann. So kann eine Entkopplung von Sauerstoff- und Wasserstoffsystem noch sicherer ausgebildet werden.

Die vorangehend in Verbindung mit der Vorrichtung zum elektrischen Erzeugen von Wasserstoff aus Wasser erläuterten Ausgestaltungen können im Zusammenhang mit dem Verfahren zum elektrischen Erzeugen von Wasserstoff aus Wasser entsprechend vorgesehen sein.

### Beschreibung von Ausführungsbeispielen

Nachfolgend werden weitere Ausführungsbeispiele unter Bezugnahme auf eine Figur erläutert.

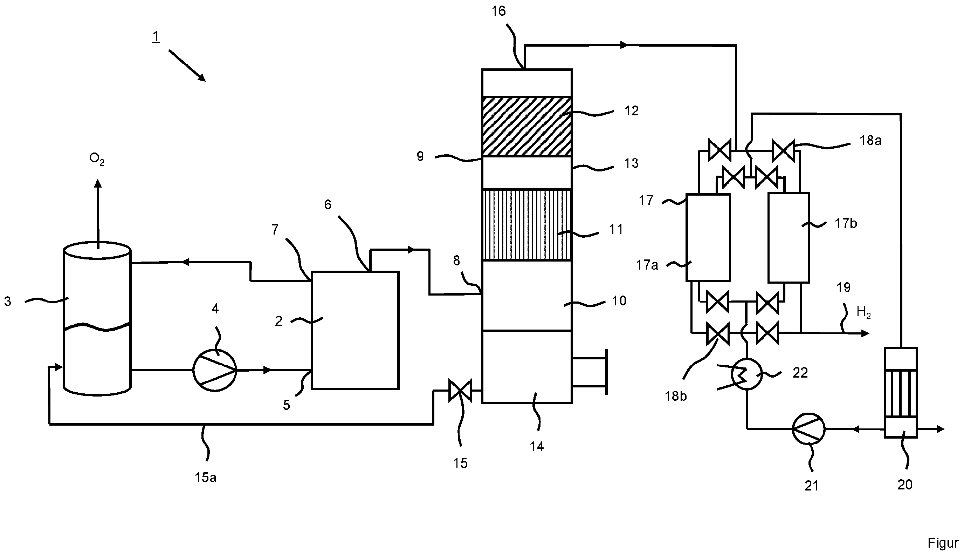

Die einzige Figur zeigt eine schematische Darstellung einer Anordnung mit einer Vorrichtung 1 zum elektrischen Erzeugen von Wasserstoff aus Wasser. Einem Elektrolyseur 2 vom AEM- oder PEM-Bautyp wird aus einem Wasserreservoir oder -vorrat 3 über eine Wasserpumpe 4 Wasser zugeführt. Das Wasser wird dem Elektrolyseur 2 über einen Eingang 5 zugeführt. Der Elektrolyseur 2 weist einen ersten Ausgang 6 für mit Wasser und / oder Wasserdampf angereicherten und im Elektrolyseur 2 erzeugten Wasserstoff auf. Über einen zweiten Ausgang 7 des Elektrolyseurs 2 werden Sauerstoff und Wasser abgeführt.

Bei der dargestellten Ausführungsform ist der Wasservorrat 3 mit einem Sauerstoffabscheider ausgeführt.

Über den ersten Ausgang 6 des Elektrolyseurs 2 gelangt der mit Wasser und / oder Wasserdampf beladene Wasserstoff zu einem Eingang 8 einer Wasserabscheidevorrichtung 9, die als eine integrale oder integrierte Wasserabscheidevorrichtung mit mehreren Abscheidestufen ausgeführt ist. Die mehreren Abscheidestufen umfassen eine erste mechanische Abscheidestufe 10, eine zweite thermische Abscheidestufe 11 sowie eine dritte Koagulations-abscheidestufe 12, die bei der integralen Wasserabscheidevorrichtung in einem Behälter 13 in Prozessrichtung hintereinander angeordnet sind, um aus dem vom Elektrolyseur 2 erhaltenen Wasserstoff das Wasser und / oder den Wasserdampf abzuscheiden bzw. zu entfernen. Das abgeschiedene Wasser wird in einem gemeinsamen Auffangbehälter 14 der integralen Wasserabscheidevorrichtung gesammelt, welcher in den Behälter 13 integriert oder mit diesem in leitungs- oder fließverbunden ist. Das gesammelte Wasser kann aus dem gemeinsamen Auffangbehälter 14 über ein Auslassventil 15 in einer Rückführleitung 15a dem Wasservorrat 3 zugeführt werden.

Zwischen dem Auslassventil 15 der Wasserabscheidevorrichtung 9 und dem Wassersvorrat 3 kann (in der Rückführleitung 15a) ein Behälter, wahlweise mit einer Pumpe, installiert sein (nicht dargestellt), der zur Atmosphäre geöffnet werden kann und ebenfalls im Niveau überwacht wird, um eine Entkopplung von Sauerstoff- und Wasserstoffsystem noch sicherer zu machen.

Der in der Wasserabscheidevorrichtung 9 getrocknete Wasserstoff gelangt über einen Ausgang 16 der Wasserabscheidevorrichtung 9 zu einer Druck-Temperatur-Wechselabsorption-Einrichtung 17 (DTWA) mit DTWA-Behältern 17a, 17b, denen Umschaltarmaturen 18a, 18b zugeordnet sind. Über die DTWA-Behälter 17a, 17b gelangt der Wasserstoff zu einer Wasserstoffentnahme 19, von wo der hergestellte und getrocknete Wasserstoff einer weiteren Verwendung zugeführt werden kann.

Den DTWA-Behälter 17a, 17b sind ein weiterer thermischer Abscheider 20, eine Regenerationsgebläse 21 sowie ein Gaserhitzer 22 zugeordnet, um ein Regenerationsgas zum Trocknen in den DTWA-Behältern 17a, 17b bereitzustellen. Mittels der DTWA-Behälter 17a, 17b und den zugeordneten Komponenten ist die der Wasserabscheidevorrichtung 9 nachgelagerte Druck-Temperatur-Wechselabsorption-Einrichtung 17 bereitgestellt.

Den DTWA-Behältern 17a, 17b können ein oder zwei Behälter vorgeschaltet sein, die eingerichtet sind für eine weitere Gasreinigung, zum Beispiel eine Reduzierung des Sauerstoffgehaltes durch katalytische Oxidation.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

## Patentansprüche

1. Vorrichtung (1) zum elektrischen Erzeugen von Wasserstoff aus Wasser, mit:
- einem Elektrolyseur (2) der PEM- oder AEM-Bauart, aufweisend
- einen Eingang (5) zum Zuführen von Wasser aus einem Wasservorrat (3),
- einen ersten Ausgang (6) für mit Wasser und / oder Wasserdampf angereicherten und im Elektrolyseur (2) erzeugten Wasserstoff und
- einen zweiten Ausgang (7) für Sauerstoff und Wasser; und
- einer Wasserabscheidevorrichtung (9) mit mehreren Abscheidestufen, bei der ein Eingang (8) mit dem ersten Ausgang (6) leitungsverbunden ist und deren Ausgang (16), eingerichtet ist, getrockneten Wasserstoff abzugeben, wobei die mehreren Abscheidestufen Folgendes aufweist:
- eine erste mechanische Abscheidestufe (10),
- eine zweite thermische Abscheidestufe (11), welche in der mehrstufigen Wasserabscheidevorrichtung (9) der ersten mechanischen Abscheidestufe (10) nachgelagert ist, und
- eine dritte Koagulations-Abscheidestufe (12), welche in der mehrstufigen Wasserabscheidevorrichtung (9) der zweiten thermischen Abscheidestufe (11) nachgelagert ist und einen Koagulator aufweist.

2. Vorrichtung (1) nach Anspruch 1, **dadurch gekennzeichnet, dass** die dritte Koagulations-Abscheidestufe (12) mit einem Gewebe- und / oder einem Vlies-Koagulator gebildet ist.

3. Vorrichtung (1) nach Anspruch 1 oder 2, **dadurch gekennzeichnet, dass** die Wasserabscheidevorrichtung (9) mit den mehreren Abscheidestufen als eine integrale Wasserabscheidevorrichtung (9) ausgeführt ist.

4. Vorrichtung (1) nach Anspruch 3, **dadurch gekennzeichnet, dass** für die mehreren Abscheidestufen ein gemeinsamer Druckraum gebildet ist, in welchem für die mehreren Abscheidestufen eine jeweilige Wasserabscheidung ausführbar und aus dem abgeschiedenes Kondensat für die mehreren Abscheidestufen gemeinsam abführbar ist.

5. Vorrichtung (1) nach Anspruch 4, **dadurch gekennzeichnet, dass** der gemeinsame Druckraum für die mehreren Abscheidestufen in einem die mehreren Abscheidestufen aufnehmenden Behälter (13) ausgebildet ist.

6. Vorrichtung (1) nach mindestens einem der vorangehenden Ansprüche, **dadurch gekennzeichnet, dass** ein Ausgang der Wasserabscheidevorrichtung (9) mit einem Wasserkreislauf des Elektrolyseurs (2) leitungsverbunden ist, so dass Wasser rückführbar ist.

7. Vorrichtung (1) nach mindestens einem der vorangehenden Ansprüche, **dadurch gekennzeichnet, dass** der Wasservorrat (3) einen integrierten Sauerstoffabscheider aufweist.

8. Vorrichtung (1) nach mindestens einem der vorangehenden Ansprüche, **dadurch gekennzeichnet, dass** der Elektrolyseur (2) eingerichtet ist für einen Betrieb bei einer Betriebstemperatur zwischen etwa 60°C und etwa 120°C, bevorzugt zwischen etwa 70°C und etwa 80°C.

9. Vorrichtung (1) nach mindestens einem der vorangehenden Ansprüche, **dadurch gekennzeichnet, dass** die Vorrichtung (1) mit dem Elektrolyseur (2), der Wasserabscheidevorrichtung (9) sowie zugeordneten Leitungen eingerichtet ist, den getrockneten Wasserstoff mit einem Druck etwa 20bar bis etwa 100bar, bevorzugt mit einem Druck von etwa 40bar bis etwa 100bar zu erzeugen und an einer Wasserstoffentnahme (17) bereitzustellen.

10. Vorrichtung (1) nach mindestens einem der vorangehenden Ansprüche, **gekennzeichnet** eine Druck-Temperatur-Wechselabsorption-Einrichtung (17), die der Wasserabscheidevorrichtung (9) nachgelagert ist.

11. Vorrichtung (1) nach mindestens einem der vorangehenden Ansprüche, **gekennzeichnet durch** eine Rückführleitung (15a), die eingerichtet ist, in der Wasserabscheidevorrichtung (9) gesammeltes Wasser dem Wasservorrat (3) zuzuführen.

12. Vorrichtung (1) nach Anspruch 11, **dadurch gekennzeichnet, dass** zwischen einem Auslassventil (15) für das in der Wasserabscheidevorrichtung (9) gesammelte Wasser, welches mit der Rückführleitung (15a) verbunden ist, und dem Wassersvorrat (3) ein Behälter angeordnet ist, der zur Atmosphäre geöffnet werden kann.

13. Verfahren zum elektrischen Erzeugen von Wasserstoff aus Wasser mittels einer Vorrichtung (1) nach mindestens einem der vorangehenden Ansprüche, mit:
- Bereitstellen eines Elektrolyseurs (2) der PEM- oder AEM-Bauart, aufweisend
- einen Eingang (5) zum Zuführen von Wasser aus einem Wasservorrat (3),
- einen ersten Ausgang (6) für mit Wasser und / oder Wasserdampf angereicherten und im Elektrolyseur (2) erzeugten Wasserstoff und
- einen zweiten Ausgang (7) für Sauerstoff und Wasser;
- Bereitstellen einer Wasserabscheidevorrichtung (9) mit mehreren Abscheidestufen, bei der ein Eingang (8) mit dem ersten Ausgang (6) leitungsverbunden ist und deren Ausgang (16), eingerichtet ist, getrockneten Wasserstoff zu einer Wasserstoffentnahme (19) abzugeben, wobei die mehreren Abscheidestufen Folgendes aufweist:
- eine erste mechanische Abscheidestufe (10),
- eine zweite thermische Abscheidestufe (11), welche in der mehrstufigen Wasserabscheidevorrichtung (9) der ersten mechanischen Abscheidestufe (10) nachgelagert ist, und
- eine dritte Koagulations-Abscheidestufe (12), welche in der mehrstufigen Wasserabscheidevorrichtung (9) der zweiten thermischen Abscheidestufe (11) nachgelagert ist und einen Koagulator aufweist
- Zuführen von Wasser zu dem Elektrolyseur (2);
- Erzeugen von mit Wasser und / oder Wasserdampf angereichertem Wasserstoff mittels des Elektrolyseurs (2);
- mehrstufiges Trocknen des mit Wasser und / oder Wasserdampf angereicherten Wasserstoffs mittels der Wasserabscheidevorrichtung (9) und
- Bereitstellen von getrocknetem Wasserstoff an der Wasserstoffentnahme (19).
